# FASCICULE DE BREVET EUROPEEN

(11) **EP 3 025 352 B1**
(45) Date de publication et mention de la délivrance du brevet: **22.11.2017**
(21) Numéro de dépôt: 14741890.9
(22) Date de dépôt: 22.07.2014
(51) Int. Cl.: F04D 29/02, F04D 29/12, G21C 15/243, F16J 15/34, G21D 1/04

(54) **GARNITURE D'ETANCHEITE POUR SYSTEME D'ETANCHEITE D'ARBRE ET PROCEDE DE LA STRUCTURATION DE SA GLACE**
PACKUNGSDICHTUNG FÜR EIN WELLENDICHTUNGSSYSTEM UND VERFAHREN ZUM STRUKTURIEREN IHRER AKTIVEN OBERFLÄCHE
PACKING SEAL INTENDED FOR A SHAFT SEALING SYSTEM AND PROCEDURE OF STRUCTURING ITS ACTIVE SURFACE

(30) Priorité: 24.07.2013 FR 1357297
(43) Date de publication de la demande: 01.06.2016
(73) Titulaire: AREVA NP, 92400 Courbevoie (FR)
(72) Inventeur: TEBBY, Zoé, F-59198 HASPRES (FR)
(74) Mandataire: Cabinet Camus Lebkiri
(86) Numéro de dépôt international: PCT/EP2014/065726
(87) Numéro de publication internationale: WO 2015/011141

(56) Documents cités:
- WO-A1-2013/035503
- JP-A- S57 161 366
- US-A1- 2011 101 616

## Description

### DOMAINE TECHNIQUE

Le domaine de l'invention est celui des groupes motopompes primaires de réacteurs nucléaires à eau sous pression (REP). Plus précisément, la présente invention concerne les glaces, également appelées faces actives, de la garniture mécanique d'étanchéité principale du groupe motopompe primaire.

### ETAT DE LA TECHNIQUE ANTERIEUR

Dans les réacteurs nucléaires, la pompe primaire génère la circulation d'eau dans le circuit primaire des réacteurs à eau sous pression. Un système d'étanchéité dynamique d'arbre assure l'étanchéité entre le circuit primaire et l'atmosphère. Ce système d'étanchéité d'arbre est un système à fuite contrôlée. Il comporte trois joints disposés en série. Chaque joint comporte deux glaces qui assurent l'étanchéité principale. Une des glaces, appelée glace tournante, est montée dans un ensemble tournant solidaire de l'arbre, l'autre glace, dite flottante, est montée dans un ensemble ne tournant pas mais libre de se déplacer axialement pour suivre les déplacements axiaux éventuels de l'arbre.

Le joint n°1 assure la plus grande partie de la chute de pression entre le circuit primaire et l'atmosphère. Il est de type hydrostatique, à film d'eau d'une épaisseur de l'ordre de 10 µm. La géométrie particulière des faces des glaces assurant l'étanchéité principale permet, à l'arrêt comme en rotation, l'ajustement automatique de leur écartement qui ne dépend que du ΔP du joint. Les glaces étaient initialement en alumine, mais elles sont de plus en plus souvent en nitrure de silicium, plus résistant au frottement.

Le joint 1 fonctionne avec un débit de fuite maitrisé, de l'ordre de 600 l/h en fonctionnement, grâce au profile spécifique usiné sur ses faces actives. Il permet de passer d'une pression de 155 bars (1 bar = 10⁵ Pa) à une pression de 2 bars environ.

Toutefois, dans les joints n°1 de l'art antérieur, on a constaté qu'un important dépôt d'oxyde de fer encrasse les faces actives et modifie la pente de ces faces, ce qui conduit à une modification du débit de fuite.

Le document « Deposition of hematite particles on alumina seal faceplates of nuclear reactor coolant pumps-laboratory experiments and industrial feedback" par Gregory Lefèvre, Ljiljana S. Zivkovic and Anne Jaubertie, Hem. Ind., 2012, explique que ce phénomène d'encrassement est dû à un phénomène en deux étapes :
- Les particules sont transportées de la solution vers les glaces par des phénomènes hydrodynamique, électrophorétique et thermophorétique ;
- Puis elles adhèrent sur les faces d'étanchéité par des interactions physico-chimiques. Dans l'art antérieur, ces interactions sont considérées comme étant essentiellement dues au fait que les particules d'hématite sont chargées positivement, tandis que les surfaces des glaces sont chargées négativement.

Pour remédier à ce problème, le document US 7,287,756 propose d'ajouter un catalyseur à la surface des glaces. Ce catalyseur est de préférence un ou un mélange des composés suivants : rhénium, ruthénium, rhodium, palladium, argent, osmium, iridium, platine, or. D'après le document US 7,287,756, le fer est présent en solution sous forme de FeOOH (goethite) et d'ions Fe²⁺. La goethite se déposerait à la surface des garnitures. En parallèle, les ions Fe²⁺ seraient oxydés par le dioxygène en ions Fe³⁺ qui précipiteraient et consolideraient le dépôt. Le dépôt évoluerait ensuite en hématite (Fe₂O₃). L'utilisation de catalyseurs permettrait de dissocier le dihydrogène présent, avec pour conséquence de diminuer le potentiel chimique, d'empêcher l'oxydation des ions Fe²⁺ et de réduire les ions Fe³⁺ présents en Fe²⁺, empêchant de ce fait le dépôt d'oxyde d'avoir lieu.

WO2013/035503 divulgue une composante annulaire d'un joint d'un arbre. La surface de cette composante comprend des structures creuses dont la profondeur, la largueur et la distance est entre 100 nanomètres et 10 micromètres.

La demanderesse a identifié un autre mécanisme de formation du dépôt d'oxyde sur les faces des glaces. Nous proposons donc une solution qui prend en compte ce mécanisme de formation.

### EXPOSE DE L'INVENTION

L'invention consiste d'une garniture d'étanchéité hydrostatique selon l'objet de la revendication 1 et d'un procédé de protection selon l'objet de la revendication 6. Elle vise à remédier aux inconvénients de l'état de l'art de la technique en proposant une solution efficace pour empêcher l'encrassement des glaces du joint n°1 du système d'étanchéité d'arbre du groupe motopompe primaire d'un réacteur nucléaire.

Pour ce faire, l'invention propose de structurer la surface des glaces de façon à créer des aspérités à la surface des glaces plus petites que les particules qui sont susceptibles de s'accrocher à la surface des glaces pour former l'encrassement. La structuration vise à limiter les points d'accroche de façon à empêcher ces particules de se fixer à la surface des glaces.

Plus précisément, l'invention propose une glace pour garniture d'étanchéité pour système d'étanchéité d'arbre de groupes motopompes primaires de réacteurs nucléaires, destinée à assurer l'étanchéité entre le circuit primaire et l'atmosphère, la glace présentant au moins une surface structurée par un réseau d'aspérités, chaque aspérité présentant des dimensions latérales comprises entre 10 nm et 5 µm, chaque aspérité présentant une hauteur comprise entre 10 nm et 5 µm, la distance entre deux aspérités consécutives étant comprise entre 10 nm et 5 µm.

Le fait de structurer la surface de la glace de façon à avoir des aspérités présentant de telles dimensions permet d'avoir à la surface de la glace des aspérités plus petites que les particules de Fe₂O₃, et donc de diminuer les points d'accroche de ces particules. En effet, contrairement au phénomène d'accroche décrit dans les documents de l'art antérieur, nos expériences ont montré que les particules d'hématite ne s'accrochent pas directement à la surface des glaces, mais elles s'accrochent aux ions Fe²⁺ qui sont eux-mêmes adsorbés à la surface des glaces. En effet, les ions Fe²⁺ sont attirés par la surface négative et donneuse d'électrons des glaces. Le Fe²⁺ est un acide de Lewis, il réagit avec les groupements oxygène présents sur la surface des glaces et peut à son tour réagir avec du Fe₂O₃ colloïdal ou particulaire qui possède une forte composante donneur d'électrons. Les ions Fe²⁺ peuvent alors s'adsorber à la surface des particules d'hématite et la réaction continue en chaine, ce qui provoque l'encrassement des glaces. Par conséquent, pour empêcher cet encrassement, la demanderesse propose d'empêcher l'accroche des particules de Fe₂O₃ au Fe²⁺ en surface des glaces.

La glace selon l'invention peut également présenter une ou plusieurs des caractéristiques ci-après prises indépendamment ou selon toutes les combinaisons techniquement possibles.

Les aspérités peuvent être des trous ou des piliers.

Lorsque les aspérités sont des trous, on appelle la hauteur du trou sa profondeur.

Lorsque les aspérités sont des piliers, le facteur de forme du pilier, qui correspond au rapport de sa hauteur sur sa dimension latérale doit être de préférence inférieur à 2 afin d'éviter des phénomènes d'érosion.

La glace selon l'invention peut être une glace tournante ou une glace flottante de la garniture d'étanchéité.

Avantageusement, toute la surface la glace qui est destinée à être en contact avec le film d'eau est structurée.

Les aspérités peuvent être des aspérités nanométriques. Dans ce cas, les aspérités présentent de préférence des dimensions latérales entre 10 nm et 1 µm, et une hauteur comprise entre 10 nm à 1 µm. La distance entre deux aspérités consécutives est de préférence comprise entre 10 nm et 1 µm.

En effet, les particules susceptibles de s'accrocher au Fe²⁺ en surface des glaces présentent généralement des dimensions comprises entre 50 nm et 5 µm, et il est préférable d'avoir des aspérités présentant des dimensions comprises entre 10 et 50%, et de préférence de l'ordre de 20 à 30%, de la taille des particules de Fe₂O₃ de façon à empêcher au maximum l'accroche des particules de Fe₂O₃ sur la surface de la glace.

Les aspérités peuvent également être des aspérités microniques. Dans ce cas, les aspérités présentent de préférence des dimensions latérales entre 1 µm et 5 µm, et une hauteur comprise entre 1 µm et 5 µm. La distance entre deux aspérités consécutives est de préférence comprise entre 1 µm et 5 µm.

Le réseau d'aspérités est de préférence régulier, c'est-à-dire qu'il comporte un motif pouvant être reproduit régulièrement, ce qui facilite le contrôle du réseau d'aspérités.

Selon un mode de réalisation, les aspérités ont de préférence les mêmes dimensions et la distance entre deux aspérités consécutives est de préférence toujours la même, ce qui facilite la fabrication du réseau d'aspérités.

Selon un mode de réalisation préférentiel, la surface de la glace est micro- et nanostructurée de façon hiérarchique par un réseau d'aspérités microniques d'une dimension latérale et d'une hauteur comprise entre 500 nm et 5 µm, et de préférence entre 1 µm et 2 µm, la distance entre deux aspérités microniques étant comprise entre 500 nm et 5 µm, et de préférence entre 1 µm et 2 µm. Ces aspérités microniques sont structurées par des aspérités nanométriques de dimensions latérales et de hauteur comprises entre 10 nm et 200 nm, et de préférence entre 50 nm et 100 nm. La distance entre deux aspérités nanométriques adjacentes est comprise entre 10 nm et 200 nm. Cette double structuration à l'échelle nanométrique et micrométrique permet de diminuer encore l'accroche des particules pouvant former le dépôt.

Les aspérités nanométriques peuvent être des trous ou des piliers.

Les aspérités microniques peuvent être des trous ou des piliers.

Les glaces du joint sont de préférence en nitrure de silicium.

Un autre aspect de l'invention concerne également un procédé de protection contre l'encrassement des glaces de garniture d'étanchéité pour système d'étanchéité d'arbre de motopompes primaires de réacteurs nucléaires, comportant une étape de structuration de la surface de la glace de façon à réaliser un réseau d'aspérités à la surface de la glace. Chaque aspérité présentant des dimensions latérales comprises entre 10 nm et 5 µm, et une hauteur comprise entre 10 nm et 5 µm. La distance entre deux aspérités consécutives est comprise entre 10 nm et 5 µm.

Les aspérités peuvent être des trous ou des piliers.

Lorsque les aspérités sont des piliers, ils présentent de préférence un facteur de forme inférieur à 2 afin d'éviter des phénomènes d'érosion.

Selon différents modes de réalisation, cette étape de nanostructuration ou microstructuration peut être réalisée selon :
- Une approche descendante (top-down) par micro ou nanolithographie, lithographie à faisceau d'électrons, lithographie à rayons X, lithographie à rayons UV profonds, lithographie par nanoimpression, lithographie par interférence, par faisceau d'ions focalisé, structuration laser ou par microscopie à sonde à balayage. Ces étapes peuvent comporter une étape de gravure voie sèche ou voie humide.
- Une approche ascendante (bottom-up) (lithographie nanosphère ou colloidale) au cours de laquelle on peut se servir d'un masque de micro- ou nano-objets (billes, nanoparticules, copolymères à bloc auto-assemblés) pour répliquer les aspérités dans le substrat par gravure voie humide, voie sèche ou laser.

Le procédé peut également comporter une ou plusieurs des étapes suivantes :
- Une étape de réduction de tailles des micro- ou nano-objets
- une étape de dépôt d'une couche servant de masque sur les micro- ou nano-objets et sur le substrat non couvert entre les micro- ou nano-objets
- une étape d'enlèvement des micro- ou nano-objets, laissant le masque sur le substrat et formant un réseau de trous dans le masque formé par l'empreinte des micro- ou nano-objets
- une étape de gravure à travers l'empreinte des nano-objets et l'enlèvement du masque.
Le procédé peut également comporter une étape de dépôt d'une couche protectrice contre l'encrassement sur la surface de la glace. Cette couche protectrice est de préférence réalisée en SiC, TiN, CrN, Ni ou en diamant micro- ou nanocristallin. Dans ce cas, c'est de préférence la surface de la couche protectrice qui est micro- ou nanostructurée.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une vue en coupe d'un système d'étanchéité à arbre ;
- La figure 2, une vue schématique d'un joint n°1 ;
- La figure 3, une représentation schématique du phénomène d'encrassement d'une glace de joint ;
- La figure 4, une représentation schématique de l'accroche des particules sur la surface d'une glace de joint selon un mode de réalisation de l'invention et sur une surface de glace plane ;
- La figure 5, une représentation schématique de deux procédés selon un mode de réalisation de l'invention ;
- La figure 6, une représentation schématique de la surface d'une glace selon un mode de réalisation de l'invention ;
- La figure 7, une représentation schématique de la surface d'une glace selon un autre mode de réalisation de l'invention ;
- La figure 8, une représentation schématique d'une glace selon un autre mode de réalisation de l'invention.
Pour plus de clarté, les éléments identiques ou similaires sont repérés par des signes de références identiques sur l'ensemble des figures.

### DESCRIPTION DETAILLEE D'AU MOINS UN MODE DE REALISATION

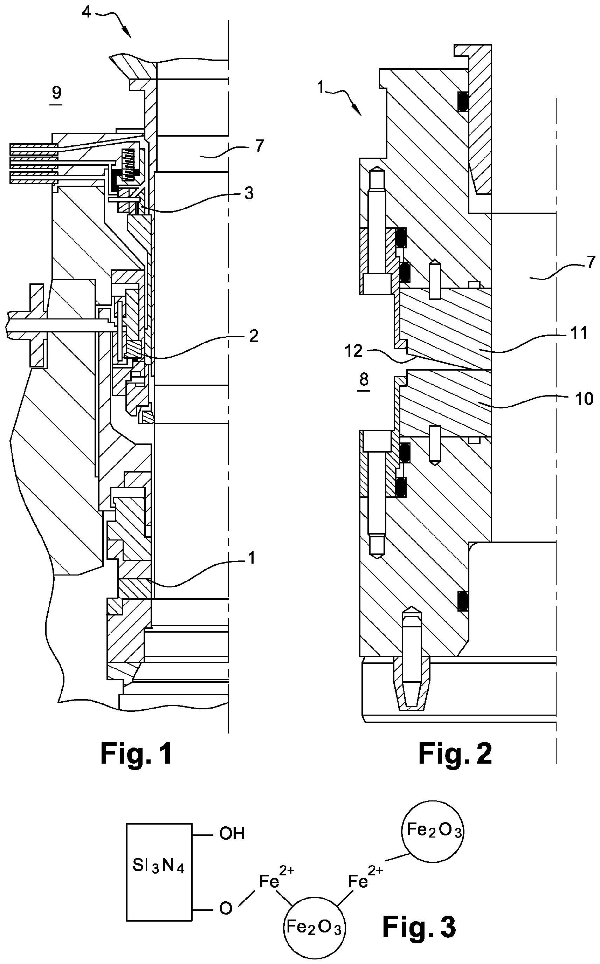

La figure 1 représente un système de garnitures mécaniques d'étanchéité d'arbre 4 de groupe motopompe primaire d'un réacteur nucléaire. Ce système d'étanchéité d'arbre comporte un joint n°1 référencé 1 sur la figure, un joint n°2 référencé 2 sur la figure, un joint n°3 référencé 3 sur la figure. Chaque joint 1, 2, 3 se compose d'une glace tournante solidaire de l'arbre 7 et d'une glace flottante pouvant suivre les déplacements axiaux de l'arbre 7 mais ne tournant pas.

Le joint n°1 est représenté plus précisément sur la figure 2. Le joint n°1 assure la plus grande partie de la chute de pression entre le circuit primaire 8 et l'atmosphère 9. Le joint n°1 est de type hydrostatique, à film deau d'une épaisseur de l'ordre de 10 µm. Le joint n°1 comporte une glace tournante 10 solidaire de l'arbre 7 et une glace flottante 11 qui peut suivre les déplacements axiaux de l'arbre 7. Le débit de fuite du joint n°1 est déterminé par la double pente de la glace flottante 11 ou par les pentes des glaces tournante 10 et flottante 11. Les glaces sont en nitrure de silicium Si3N4.

Le processus d'encrassement des glaces 10, 11 en l'absence des caractéristiques de l'invention est expliqué sur la figure 3. De l'eau circule entre les glaces 10, 11. Cette eau apporte des ions Fe²⁺ qui s'adsorbent préférentiellement à la surface des glaces en Si₃N₄. Le Fe²⁺ est un acide de Lewis, il réagit avec les groupements oxygène présents sur la surface des glaces et peut à son tour réagir avec du Fe₂O₃ colloïdale ou particulaire qui possède une forte composante donneur d'électrons. Les ions Fe²⁺ peuvent alors s'adsorber à la surface des particules d'hématite et la réaction continue en chaine, ce qui provoque l'encrassement des glaces.

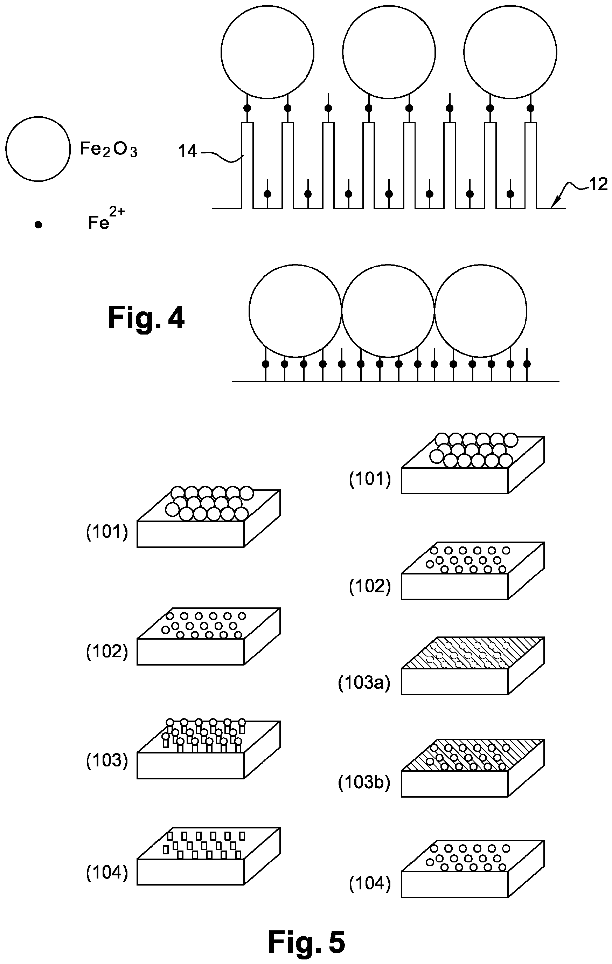

Pour éviter ce processus d'encrassement, en référence à la figure 4, la surface 12 de chacune des glaces 10, 11 est structurée de façon à avoir des aspérités 14 à la surface des glaces qui présentent une taille comprise entre 10% et 50% de la taille des particules de Fe₂O₃. Par conséquent, la surface des glaces est structurée par un réseau d'aspérités 14, qui peuvent être des trous ou des piliers.

Lorsque les aspérités 14 sont des trous, chaque trou possède des dimensions latérales comprises entre 10 nm et 5 µm, et une hauteur de 10 nm à 5 µm. La distance entre deux trous consécutifs étant comprise entre 10 nm et 5 µm.

Lorsque les aspérités sont des piliers, chaque pilier possède des dimensions latérales comprises entre 10 nm et 5 µm et une hauteur comprise entre 10 nm à 5 µm. Le facteur de forme, c'est-à-dire le rapport hauteur sur dimension latérale est de préférence inférieur à 2 afin d'éviter des phénomènes d'érosion. La distance entre deux piliers consécutifs est comprise entre 10 nm et 5 µm.

Ainsi, même si des ions Fe²⁺ s'adsorbent à la surface des glaces, l'accroche des particules de Fe₂O₃ à la surface des glaces est ensuite limitée par la rugosité de surface des glaces par rapport à une surface plane, empêchant ainsi l'encrassement des glaces.

La structuration de la surface des glaces peut être réalisée par différentes méthodes.

Selon un mode de réalisation, la structuration est une nanostructuration qui peut être réalisée selon une approche ascendante (bottom-up), par exemple en utilisant un procédé de lithographie nanosphère.

Ainsi, la figure 5 représente un procédé de lithographie nanosphère (NSL) permettant d'obtenir un réseau de trous ou de piliers en surface des glaces. La lithographie nanosphère est basée sur l'auto-assemblage de micro- ou nanosphères monodisperses (polystyrène par exemple) à la surface d'un substrat afin de former un masque bidimensionnel. Le procédé comporte tout d'abord une étape 101 de dépôt de microsphères ou de nanosphères à la surface de la glace. Les méthodes pour déposer la suspension de sphères sont variées : on peut notamment citer le spin-coating (tournette), la méthode Langmuir-Blodgett ou le dip-coating (trempage-retrait). Le procédé comporte ensuite une étape 102 de réduction de la taille des sphères par gravure par ions réactifs.

Lorsque les aspérités à réaliser sont des piliers, le procédé comporte ensuite une étape 103 de gravure de la surface des glaces à travers le masque formé par les sphères de façon à réaliser un réseau de piliers en surface de chacune des glaces. Le procédé comporte ensuite une étape 104 de suppression des billes.

Lorsque les aspérités à réaliser sont des trous, le procédé comporte une étape 103a de dépôt d'une couche de chrome par exemple par-dessus le réseau de billes de taille réduite. Le procédé comporte ensuite une étape 103b de suppression des billes. Le procédé comporte ensuite une étape de gravure à travers l'empreinte des billes (non représenté). Enfin le procédé comporte une étape 104 de suppression du masque de chrome de façon à former un réseau de trous.

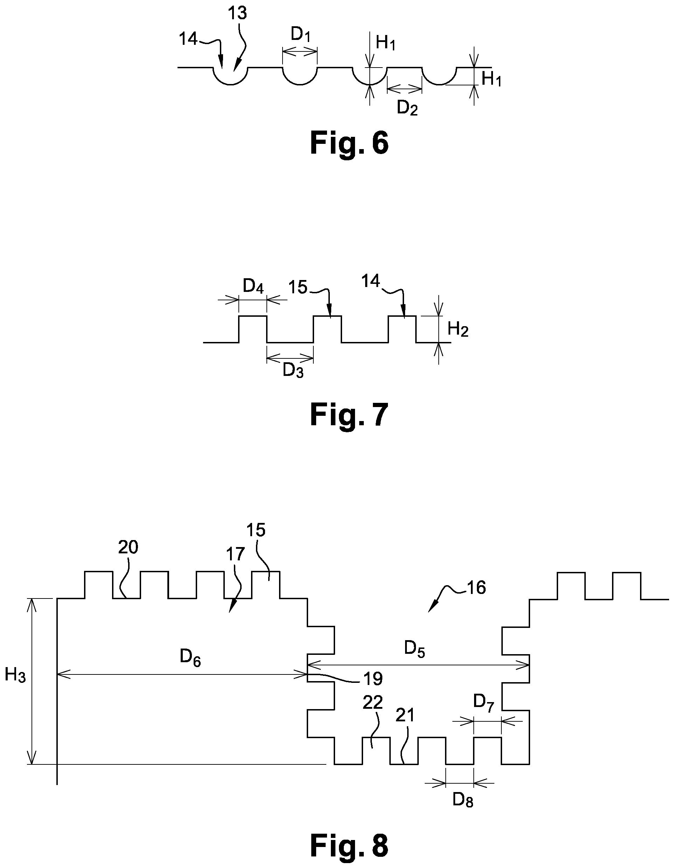

La figure 6 représente schématiquement un réseau d'aspérités 14 en en surface d'une des glaces selon un mode de réalisation de l'invention. Dans ce mode de réalisation, les aspérités sont des trous 13. Les trous 13 présentent des dimensions latérales D1 comprises entre 10 nm et 5 µm. Les trous 13 présentent une hauteur H1 comprise entre 10 nm et 5 µm. Deux trous 13 adjacents sont espacés d'une distance D2 comprise entre 10 nm et 5 µm.

La figure 7 représente schématiquement un réseau de aspérités en surface d'une des glaces sont un autre mode de réalisation de l'invention. Dans ce mode de réalisation, les aspérités 14 sont des piliers 15. Les piliers 15 présentent une dimension latérale D4 comprise entre 10 nm et 5 µm. Les piliers 15 présentent une hauteur H2 comprise entre 10 nm et 5 µm. Deux piliers 15 adjacents sont espacés d'une distance D3 comprise entre 10 nm et 5 µm. La hauteur H2 de ces piliers est de préférence limité à des rapports H2/D4 inférieurs à 2 afin de limiter les phénomènes d'érosion.

La figure 8 représente schématiquement la surface d'une glace selon un autre mode de réalisation de l'invention. Dans ce mode de réalisation, la surface de chacune des glaces présente une double structuration : ainsi, la surface de chacune des glaces est micro-structurée par un réseau d'aspérités microniques. Dans ce mode de réalisation, les aspérités microniques sont des piliers 17. Les piliers 17 présentent des dimensions latérales D6 comprises entre 500 nm et 5 µm. Les piliers 17 présentent une hauteur H3 comprise entre 500 nm et 5 µm. Les piliers 17 sont séparés par des espaces 16 qui présentent des dimensions transversales D5 comprises entre 500 nm et 5 µm. Par ailleurs, les piliers 17 présentent de préférence un rapport hauteur H3 sur dimensions transversales D6 inférieur à 2 et plus préférentiellement inférieur à 1 afin de limiter les problèmes d'érosion. La surface des glaces peut par exemple être microstructurée par un procédé de lithographie.

La surface des glaces est en outre nanostructurée par un réseau d'aspérités nanométriques 22. Dans ce mode de réalisation, les aspérités nanométriques 22 sont des piliers semblables à ceux décrits en référence à la figure 7. La surface nanostructurée est présente au fond 21 des espaces entre piliers 17, à la surface supérieure 20 des piliers 17 et de préférence également sur les flans 19 des piliers 17. Une telle nanostructuration des surfaces supérieures 20, du fond 21 et des flans 19 des piliers peut être réalisée en recouvrant la surface de la glace microstructurée par des nanoparticules formées par pulvérisation cathodique. La surface de la glace doit être inclinée et en rotation afin de pouvoir déposer des particules sur les flans 19 des piliers 17. La surface de la glace sera alors gravée par ions réactifs sous pression élevée afin de réaliser une gravure isotropique. Les nanoparticules positionnées sur les piliers sont ensuite enlevées.

Naturellement l'invention n'est pas limitée aux modes de réalisation décrits en référence aux figures et des variantes pourraient être envisagées sans sortir du cadre de l'invention. Le procédé utilisé pour réaliser le réseau de trous ou de piliers micro- ou nanostructuré peut être un autre procédé que celui décrit en référence à la figure 5, comme par exemple une approche descendante comme la lithographie par faisceau d'électrons, la lithographie par rayons X, la lithographie par faisceau d'ions focalisé, la lithographie par nano-impression, la lithographie par interférence. On peut également réaliser le réseau de trous ou de piliers microniques ou nanométriques selon une approche ascendante, par exemple en utilisant un masque de micro- ou nano-objets, organisé ou non de façon à mettre en oeuvre un procédé de lithographie nanosphère ou bien un procédé de lithographie colloïdale, ou bien un procédé de lithographie en utilisant un assemblage de co-polymères à bloc, de façon à transférer les motifs dans la surface de la glace, par exemple par gravure sèche, humide, ou par laser. On peut notamment focaliser le laser à travers des billes de SiO₂, ce qui crée un trou dans la surface de la glace à l'emplacement de la bille. Par ailleurs, le procédé de réalisation du réseau de trous ou de piliers peut également comporter des étapes supplémentaires comme le dépôt d'une autre couche au dessus des billes, l'enlèvement des billes et la gravure à travers leur empreinte.

Par ailleurs, la surface des glaces peut également être revêtue d'une couche protectrice permettant d'éviter que les ions Fe²⁺ s'adsorbent sur la surface des glaces. Dans ce cas, la surface des glaces est de préférence revêtue de la couche protectrice préalablement à l'étape de micro- ou nanostructuration. La couche protectrice est de préférence réalisée en carbure de silicium (SiC), nitrure de titane (TiN), nitrure de chrome (CrN), nickel (Ni) ou diamant micro- ou nanocristallin.

## Revendications

1. Garniture d'étanchéité hydrostatique pour système d'étanchéité d'arbre de groupes motopompes primaires de réacteurs nucléaires, destinée à assurer l'étanchéité entre le circuit primaire (8) et l'atmosphère (9), la garniture d'étanchéité comportant une glace (10, 11) présentant au moins une surface (12) structurée par un réseau d'aspérités (14), chaque aspérité (14) présentant des dimensions latérales (D1, D4, D6) comprises entre 10 nm et 5 µm, chaque aspérité (14) présentant une hauteur (H1, H2, H3) comprise entre 10 nm et 5 µm, la distance (D2, D3, D5) entre deux aspérités (14) consécutives étant comprise entre 10 nm et 5 µm, les aspérités étant des trous (13) ou des piliers (15).

2. Garniture selon la revendication précédente, dans laquelle les piliers (15) présentent un rapport hauteur sur dimension latérale inférieur à 2, et de préférence à 1.

3. Garniture selon l'une des revendications précédentes, dans laquelle les aspérités sont des aspérités nanométriques présentant des dimensions latérales comprises entre 10 nm et 1 µm et une hauteur comprise entre 10 nm et 1 µm, la distance entre deux aspérités consécutives étant comprise entre 10 nm et 1 µm.

4. Garniture selon l'une des revendications précédentes, dans laquelle les aspérités sont des aspérités microniques présentant des dimensions latérales comprises entre 1 µm et 5 µm et une hauteur comprise entre 1 µm et 5 µm, la distance entre deux aspérités consécutives étant comprise entre 1 µm et 5 µm.

5. Garniture selon l'une des revendications précédentes, dans laquelle la surface de la glace est micro- et nanostructurée par un réseau d'aspérités microniques (17) d'une dimension latérale et d'une hauteur comprise entre 500 nm et 5 µm, la distance entre deux aspérités microniques (17) étant comprise entre 500 nm et 5 µm, les aspérités microniques (17) étant structurées par des aspérités nanométriques (22) de dimensions latérales et de hauteur comprises entre 10 nm et 200 nm, la distance entre deux aspérités nanométriques (22) adjacentes étant comprise entre 10 nm et 200 nm.

6. Procédé de protection contre l'encrassement d'une garniture d'étanchéité hydrostatique pour système d'étanchéité d'arbre de motopompes primaires de réacteurs nucléaires, ladite garniture d'étanchéité comportant une glace, ledit procédé comportant une étape de structuration de la surface (12) de la glace de façon à réaliser un réseau d'aspérités à la surface de la glace, chaque aspérité présentant des dimensions latérales comprises entre 10 nm et 5 µm, et une hauteur comprise entre 10 nm à 5 µm, la distance entre deux aspérités consécutives étant comprise entre 10 nm et 5 µm, les aspérités étant des trous ou des piliers.

7. Procédé selon la revendication précédente, comportant en outre une étape de dépôt d'une couche protectrice contre l'encrassement sur la surface de la glace, cette couche protectrice étant réalisée dans un des matériaux suivants : SiC, TiN, CrN, Ni, diamant micro- ou nanocristallin.

## Patentansprüche

1. Hydrostatische Dichtungspackung für ein Wellendichtungssystem von primären Motorpumpengruppen von Atomreaktoren, die dazu bestimmt ist, die Abdichtung zwischen dem primären Schaltkreis (8) und der Atmosphäre (9) zu gewährleisten, wobei die Dichtungspackung ein Glas (10, 11) umfasst, das wenigstens eine durch ein Netz von Unebenheiten (14) strukturierte Oberfläche (12) aufweist, wobei jede Unebenheit (14) laterale Abmessungen (D1, D4, D6) aufweist, die zwischen 10 nm und 5 µm inbegriffen sind, wobei jede Unebenheit (14) eine Höhe (H1, H2, H3) aufweist, die zwischen 10 nm und 5 µm inbegriffen ist, wobei die Entfernung (D2, D3, D5) zwischen zwei aufeinander folgenden Unebenheiten (14) zwischen 10 nm und 5 µm inbegriffen ist, wobei die Unebenheiten Löcher (13) oder Säulen (15) sind.

2. Packung gemäß dem voranstehenden Anspruch, bei der die Säulen (15) ein Verhältnis Höhe zur lateralen Abmessung von weniger als 2 und bevorzugt 1 aufweisen.

3. Packung gemäß einem der voranstehenden Ansprüche, bei dem die Unebenheiten nanometrische Unebenheiten sind, die laterale Abmessungen umfassen, die zwischen 10 nm und 1 µm inbegriffen sind, und eine Höhe, die zwischen 10 nm und 1 µm inbegriffen ist, wobei die Entfernung zwischen zwei aufeinanderfolgenden Unebenheiten zwischen 10 nm und 1 µm inbegriffen ist.

4. Packung gemäß einem der voranstehenden Ansprüche, bei der die Unebenheiten mikronische Unebenheiten sind, die laterale Abmessungen aufweisen, die zwischen 1 µm und 5 µm inbegriffen sind, und eine Höhe, die zwischen 1 µm und 5 µm inbegriffen ist, wobei die Entfernung zwischen zwei aufeinander folgende Unebenheiten zwischen 1 µm und 5 µm inbegriffen ist.

5. Packung gemäß einem der voranstehenden Ansprüche, bei der die Oberfläche des Glases durch ein Netz von mikronischen Unebenheiten (17) mit einer lateralen Abmessung und einer Höhe, die zwischen 500 nm und 5 µm inbegriffen ist, mikro- und nanostrukturiert ist, wobei die Entfernung zwischen zwei mikronischen Unebenheiten (17) zwischen 500 nm und 5 µm inbegriffen ist, wobei die mikronischen Unebenheiten (17) durch nanometrische Unebenheiten (22) mit lateralen Abmessungen und mit einer Höhe, die zwischen 10 nm und 200 nm inbegriffen ist, strukturiert sind, wobei die Entfernung zwischen zwei angrenzenden nanometrischen Unebenheiten (22) zwischen 10 nm und 200 nm inbegriffen ist.

6. Schutzverfahren vor der Verschmutzung einer hydrostatischen Dichtungspackung für ein Wellendichtungssystem von primären Motorpumpengruppen von Atomreaktoren, wobei die genannte Dichtungspackung ein Glas umfasst, wobei das genannte Verfahren einen Strukturierungsschritt der Oberfläche (12) des Glases derart umfasst, dass ein Netz von Unebenheiten an der Oberfläche des Glases realisiert wird, wobei jede Unebenheit laterale Abmessungen, die zwischen 10 nm und 5 µm inbegriffen sind, und eine Höhe, die zwischen 10 nm und 5 µm inbegriffen ist, aufweist, wobei die Entfernung zwischen zwei aufeinander folgenden Unebenheiten zwischen 10 nm und 5 µm inbegriffen ist, wobei die Unebenheiten Löcher oder Säulen sind.

7. Verfahren gemäß dem voranstehenden Anspruch, umfassend darüber hinaus einen Aufbringschritt einer Schutzschicht vor der Verschmutzung auf der Oberfläche des Glases, wobei diese Schutzschicht aus einem der folgenden Materialien realisiert ist: SiC, TiN, CrN, Ni, Diamant-Mikro- oder Nanokristallin.

## Claims

1. A hydrostatic packing for a system for sealing the shaft of primary motor-driven pump units of nuclear reactors, intended to provide sealing between the primary circuit (8) and the atmosphere (9), the packing including an active surface (10, 11) having at least one surface (12) structured by an array of asperities (14), each asperity (14) having lateral dimensions (D1, D4, D6) between 10 nm and 5 µm, each asperity (14) having a height (H1, H2, H3) between 10 nm and 5 µm, the distance (D2, D3, D5) between two consecutive asperities (14) being between 10 nm and 5 µm, the asperities being holes (13) or pillars (15).

2. The packing according to the preceding claim, wherein the pillars (15) have a height to lateral dimension ratio lower than 2, and preferably to 1.

3. The packing according to one of the preceding claims, wherein the asperities are nanometric asperities having lateral dimensions between 10 nm and 1 µm and a height between 10 nm and 1 µm, the distance between two consecutive asperities between 10 nm and 1 µm.

4. The packing according to one of the preceding claims, wherein the asperities are micrometric asperities having lateral dimensions between 1 µm and 5 µm and a height between 1 µm and 5 µm, the distance between two consecutive asperities being between 1 µm and 5 µm.

5. The packing according to one of the preceding claims, wherein the surface of the active surface is micro- and nanostructured by an array of micrometric asperities (17) of a lateral dimension and a height between 500 nm and 5 µm, the distance between two micrometric asperities (17) being between 500 nm and 5 µm, the micrometric asperities (17) being structured by nanometric asperities (22) of lateral dimensions and height between 10 nm and 200 nm, the distance between two adjacent nanometric asperities (22) being between 10 nm and 200 nm.

6. A method for protecting against clogging of a hydrostatic packing for a system for sealing the shaft of primary motor-driven pump units of nuclear reactors, said packing including an active surface, said method including a step of structuring the surface (12) of the active surface so as to make an array of asperities at the surface of the active surface, each asperity having lateral dimensions between 10 nm and 5 µm, and a height between 10 nm to 5 µm, the distance between two consecutive asperities being between 10 nm and 5 µm, the asperities being holes or pillars.

7. The method according to the preceding claim, further including a step of depositing a clogging protecting layer onto the surface of the active layer, this protecting layer being made of one of the following materials: SiC, TiN, CrN, Ni, micro- or nanocrystalline diamond.
